(19) Europäisches Patentamt
European Patent Office
Office européen des brevets

(11) **EP 1 544 699 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
***G05B 19/19*** *(2006.01)*

(21) Anmeldenummer: **04028163.6**

(22) Anmeldetag: **26.11.2004**

(54) **Verfahren und Einrichtung zur Bewegungsführung eines bewegbaren Maschinenelementes einer Werkzeug- oder Produktionsmaschine**

Method and device for motion control of a machining element of a machine tool or a production machine

Procédé et dispositif pour la commande de déplacement d'un élement d'une machine outil ou de production

(84) Benannte Vertragsstaaten:
**DE FR GB**

(30) Priorität: **19.12.2003 DE 10359984**

(43) Veröffentlichungstag der Anmeldung:
**22.06.2005 Patentblatt 2005/25**

(73) Patentinhaber: **SIEMENS AKTIENGESELLSCHAFT**
**80333 München (DE)**

(72) Erfinder: **Papiernik, Wolfgang, Dr.**
**91077 Neunkirchen (DE)**

(56) Entgegenhaltungen:
**US-A- 5 465 035**

• **SINGER N C ET AL: "EXPERIMENTAL VERIFICATION OF COMMAND SHAPING METHODS FOR CONTROLLING RESIDUAL VIBRATION IN FLEXIBLE ROBOTS" PROCEEDINGS OF THE AMERICAN CONTROL CONFERENCE. SAN DIEGO, MAY 23 - 25, 1990, NEW YORK, IEEE, US, Bd. VOL. 2 CONF. 9, 23. Mai 1990 (1990-05-23), Seiten 1738-1744, XP000170010**

**Beschreibung**

Verfahren und Einrichtung zur Bewegungsführung eines bewegbaren Maschinenelementes einer Werkzeug- oder Produktionsmaschine

Die Erfindung betrifft ein Verfahren zur Bewegungsführung eines bewegbaren Maschinenelementes einer Werkzeug- oder Produktionsmaschine mit mindestens zwei Antriebsachsen.

Weiterhin betrifft die Erfindung eine Einrichtung zur Bewegungsführung eines bewegbaren Maschinenelementes einer Werkzeug- oder Produktionsmaschine mit mindestens zwei Antriebsachsen.

Jedes schwingfähige mechanische System (z.B. eine Antriebsachse einer Werkzeug- oder Produktionsmaschinen) ist in der Regel durch mindestens eine Eigenfrequenz gekennzeichnet, die bei einem Bewegungsvorgang angeregt wird und sich störend im Lageistwert bemerkbar ist. Aus diesem Grund ist man bestrebt, die Anregung der Mechanik der Maschine zu vermeiden.

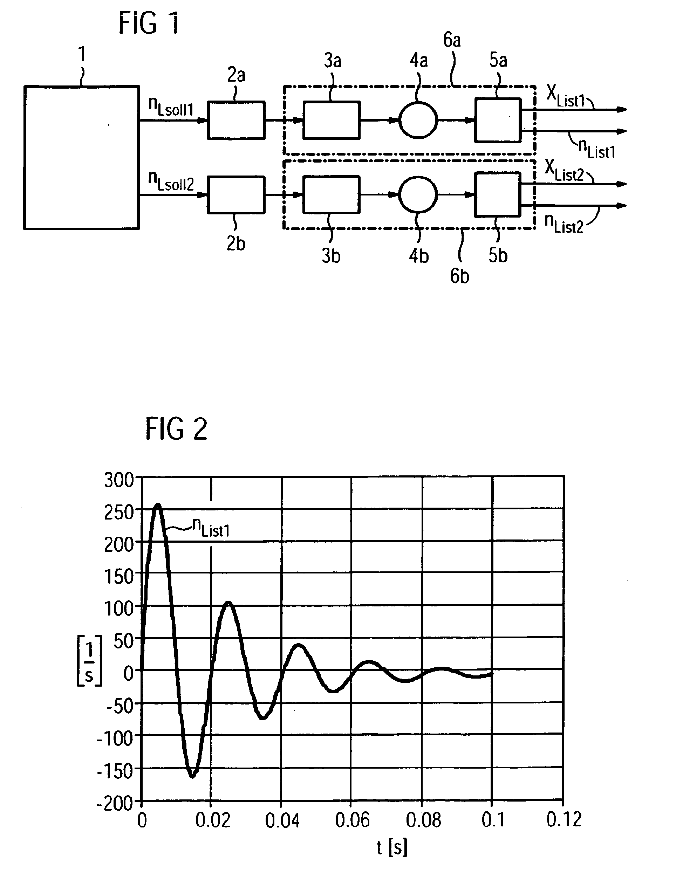

In FIG 1 ist in Form eines Blockschaltbildes ein üblicherweise verwendetes elektrisches Antriebssystem einer Werkzeugoder Produktionsmaschine dargestellt. Eine Steuerung 1 steuert, bei der in FIG 1 beispielhaft dargestellten zweiachsigen Maschine, die beiden Antriebsachsen 6a und 6b der Maschine. Die Antriebsachse 6a setzt sich in dem Ausführungsbeispiel aus einem Umrichter 3a, einem Antriebsmotor 4a und einer mit dem Antriebsmotor 4a verbundenen Mechanik 5a zusammen. Die Antriebsachse 6b setzt sich in dem Ausführungsbeispiel aus einem Umrichter 3b, einem Antriebsmotor 4b und einer an den Antriebsmotor 4b angeschlossenen Mechanik 5b zusammen. Die Steuerung 1 gibt der Regelung 2a und der Regelung 2b für jede Antriebsachse getrennt, wie in dem Ausführungsbeispiel dargestellt, zwei Geschwindigkeitssollwertverläufe in Form von zwei Lastsolldrehzahlen $n_{Lsoll1}$ und $n_{Lsoll2}$, entsprechend einer vorgegebenen Bewegungsbahn eines mittels der Antriebsachsen 6a und 6b bewegbaren Maschinenelements vor. Die Regelung 2a und 2b regelt über den jeweilig zugeordneten Umrichter 3a und 3b, die jeweilig zugehörige Lastistdrehzahl $n_{List1}$ und $n_{List2}$ einer Last entsprechend den Sollvorgaben von der Steuerung, so dass mit Hilfe einer jeweilig an den Antriebsmotor 4a und 4b angeschlossenen Mechanik 5a und 5b, die vorgegebene Bewegungsbahn des Maschinenelementes abgefahren wird. Unter der Lastistdrehzahl $n_{List1}$ oder $n_{List2}$ ist z.B. die Drehzahl, einer mittels eines Getriebes angetriebenen Spindel zu verstehen, wobei z.B. bei jeder Umdrehung der Spindel ein Werkzeug entlang einer Achse der Maschine um eine definierte Länge bewegt wird und solchermaßen die Lage des Maschinenelementes verändert wird. Das Maschinenelement wird dann entsprechend den Lageistwerten $X_{List1}$ und $X_{List2}$ auf einer Bewegungsbahn entlang der beiden Achsen der Maschine bewegt. Die für die Regelung notwendigen Rückführung der Regleristgrößen sind in FIG 1 der Übersichtlichkeit halber und da sie zum Verständnis der Erfindung unwesentlich sind, in FIG 1 nicht dargestellt.

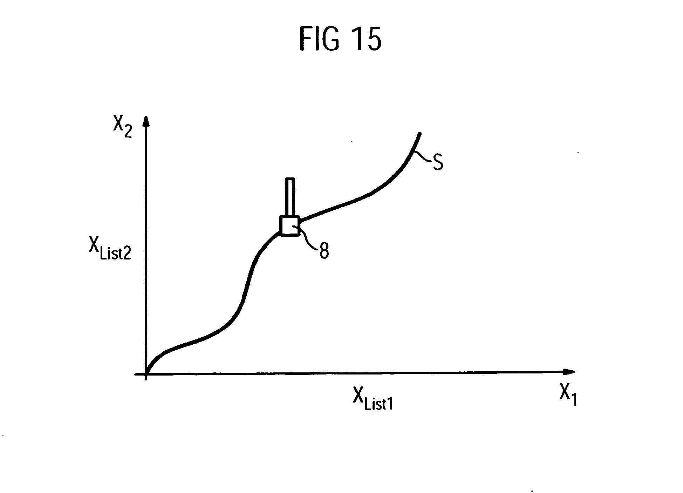

In FIG 15 ist beispielhaft eine solche Bewegungsbahn S für die zweiachsige Maschine gemäß FIG 1 dargestellt. Dabei wird ein als Fräskopf ausgebildetes Maschinenelement 8 auf der Bewegungsbahn S geführt. Die Antriebsachse 6a aus FIG 1 ist dabei für die Verfahrbewegung in $X_1$-Richtung verantwortlich, während die Antriebsachse 6b für die Verfahrbewegung in $X_2$-Richtung verantwortlich ist.

Um eine Schwingungsanregung insbesondere der Mechanik der Antriebsachsen zu vermeiden, wird heutzutage üblicherweise eine sogenannte Ruckbegrenzung eingesetzt. Damit soll eine geringere Belastung der einzelnen Antriebsachsen einer Maschine erreicht werden, ohne große Nachteile in der Programmbearbeitungszeit zu erhalten. Mit einer Ruckbegrenzung ist es möglich, den Aufbau der Beschleunigung eines Bewegungsvorgangs so zu steuern, dass der Sollwert geglättet und die Mechanik möglichst schwingungsarm anregend, bewegt wird. Unter dem Ruck wird dabei die zeitliche Ableitung der Beschleunigung verstanden.

Zur Zeit werden bei handelsüblichen Maschinen in der Steuerung der Ruck und die Beschleunigung entsprechend über vorgegebene Maschinendaten angepasst. Da aber der Ruck und die Beschleunigung entlang der Bewegungsbahn S des Maschinenelementes geführt werden, hat man, insbesondere bei im geometrischen Verbund arbeitenden Antriebsachsen nur eine sehr begrenzte Möglichkeit gezielt die Anregung, insbesondere die Anregung der jeweiligen Eigenfrequenz der einzelnen Antriebsachsen zu vermeiden.

Die vorliegende Erfindung setzt auf die bereits allgemein bekannte Methode des sogenannten "Input Shaping" auf wie sie z.B. aus der Druckschrift US 5,465,035 bekannt ist. Diese geht davon aus, dass die Schwingungsanregung der Antriebsachse, als Antwort auf einen Eingangsimpuls, durch einen verzögerten Eingangsimpuls unterschiedlicher Amplitude kompensiert werden kann. Die Mechanik 5a oder 5b der Antriebsachsen 6a und 6b, gemäß FIG 1, können dabei durch jeweils ein sogenanntes Proportional-Verzögerungsglied 2. Ordnung (kurz: PT2-Glied), welches in der Technik allgemein bekannt ist und z.B. für die Antriebachse 6a durch die Differenzialgleichung

$$\frac{d^2 n_{List1}}{dt^2} = \omega_0^2 \cdot n_{Lsoll1} - \omega_0^2 \cdot n_{List1} - 2 \cdot D \cdot \omega_0 \cdot \frac{dn_{list1}}{dt} \qquad (1)$$

mit

$$\omega_0 = 2\pi \cdot f_0$$

beschrieben wird, nachgebildet werden, wobei die Übertragungseigenschaften der Regelung 2a und des Umrichters 3a idealisierend vernachlässigt werden.

D: Dämpfung der Mechanik
$\omega_0$: Eigenkreisfrequenz der ungedämpften Mechanik
t : Zeit
$f_0 =$ Eigenfrequenz der ungedämpften Mechanik.

Die Impulsantwort des PT2-Gliedes berechnet sich dann ausgehend von Beziehung (1) zu:

$$n_{List1} = \frac{\omega_0}{\sqrt{1-D^2}} \cdot e^{-D\omega_0 t} \cdot \sin(\omega_d \cdot t) \qquad (2)$$

mit

$$\omega_d = 2\pi \cdot f_d = \omega_0 \cdot \sqrt{1+D^2} \qquad (3)$$

$$T_d = \frac{1}{f_d} \qquad (4)$$

$f_d$: Eigenfrequenz des gedämpften mechanischen Systems
$T_d$: Schwingungsdauer des gedämpften mechanischen Systems

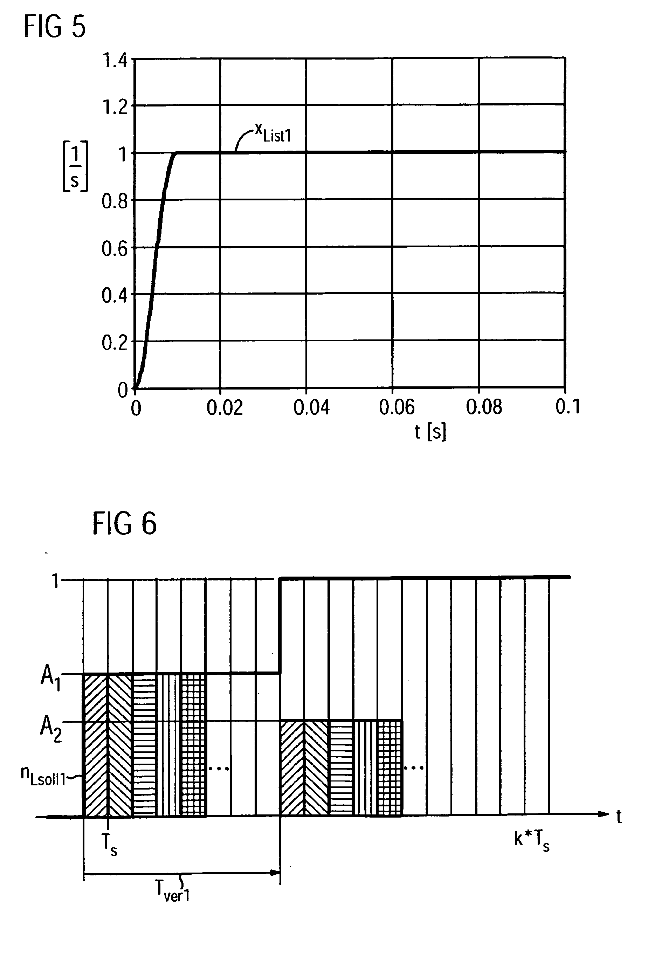

In FIG 2 ist beispielhaft der zeitliche Verlauf der Lastistdrehzahl $n_{List1}$ (Impulsantwort) der Antriebsachse 6a gemäß FIG 1 nach Anregung mit einem Impuls für eine Dämpfung D<1 dargestellt. Die Schwingung der Lastistdrehzahl $n_{List1}$ soll nun durch das bekannte Verfahren des "Input Shaping" soweit wie möglich vermieden werden. Hierzu wird das PT2-Glied durch einen weiteren Impuls angeregt, der gerade um eine halbe Periode der Schwingungsdauer $T_d$ später angelegt ist. Seine Amplitude wird dabei so gewählt, dass das Maximum, der aus dieser Impulsanregung erzeugten zweiten Impulsantwort gleich dem Minimum der ersten ist.

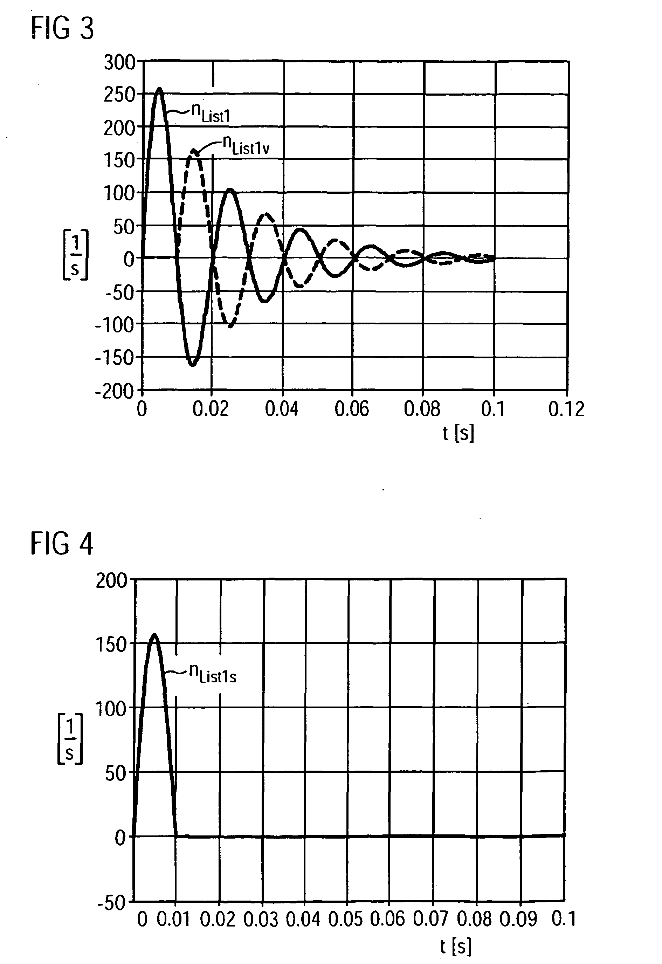

In FIG 3 ist die Impulsantwort $n_{List1}$ und die verzögerte Impulsantwort $n_{List1v}$ dargestellt.
In FIG 4 ist die Summenimpulsantwort des PT2-Gliedes auf beide Impulse in Form einer Summenlastistdrehzahl $n_{List1s}$ dargestellt. Durch die Addition der beiden Impulsantworten $n_{List1}$ und $n_{List1v}$ schwingt das mechanische System, dass durch das PT2-Glied beschrieben wird, nun wie FIG 4 zeigt, ideal ein.
Durch Integration der Summenlastistdrehzahl $n_{List1s}$ ergibt sich die Lage $X_{List1}$ des Maschinenelementes, dessen Verlauf in FIG 5 dargestellt ist. In FIG 5 wurde dabei die Lage $X_{List1}$ auf einen Wert von "1" nominiert. Wie FIG 5 zeigt, lässt sich das Maschinenelement auf die beschriebene Weise schwingungsfrei in eine vorgegebene Sollposition steuern. Aus der Forderung nach Auslöschung der Impulsantworten und stationärer Verstärkung von "1", lassen sich die beiden Amplituden A1 und A2 der beiden Anregeimpulse wie folgt berechnen:

$$\frac{A_1}{A_2} = e^{\frac{\pi D}{\sqrt{1-D^2}}} \qquad (5)$$

und

$$A_1 + A_2 = 1 \qquad (6)$$

In der praktischen Anwendung des "Input Shaping" setzt sich der Verlauf des Lastdrehzahlsollwertes $n_{Lso111}$ der Antriebsachse 6a, da heutzutage üblicherweise numerische Steuerungen und Regelungen verwendet werden, aus einer Reihe von zeitdiskreten Impulsen zusammen, deren Amplitude jeweils für die Dauer einer Abtastzeit $T_s$ konstant ist. Da das System linear ist, lassen sich die Beziehungen für Auslöschung und stationäre Verstärkung unabhängig auf alle Impulse überlagert anwenden.

Am Beispiel einer sprungförmigen Änderung der Lastsolldrehzahl $n_{Lso111}$ auf "1" ist dies anschaulich in FIG 6 gezeigt. Um z.B. die Lastdrehzahlistwert $n_{List1}$ der Antriebsachse 6a auf beispielsweise einen normierten Wert von "1" zu verfahren, werden in dem Ausführungsbeispiel unendlich viele Impulse (durch 3 Punkte in FIG. 6 angedeutet), d.h. unendlich viele Werte (Abtastwerte) der Lastsolldrehzahl $n_{Lsoll1}$ der Länge $T_s$ mit einer Amplitude von "$A_1$" und unendlich viele, um die Verzögerungszeit $T_{ver1}$ verzögerte Impulse (durch 3 Punkte in FIG. 6 angedeutet) mit der Amplitude $A_2$ benötigt. In FIG 6 sind der Übersichtlichkeit halber jeweils nur 5 Werte dargestellt. Die Lastsolldrehzahl $n_{Lso111}$ ergibt sich in Summe durch Überlagerung aller Impulse und ist in FIG. 6 dick gezeichnet dargestellt. Die Verzögerungszeit $T_{ver1}$ ist durch Beziehung (7) gegeben.

$$T_{ver1} = \frac{T_d}{2} \qquad (7)$$

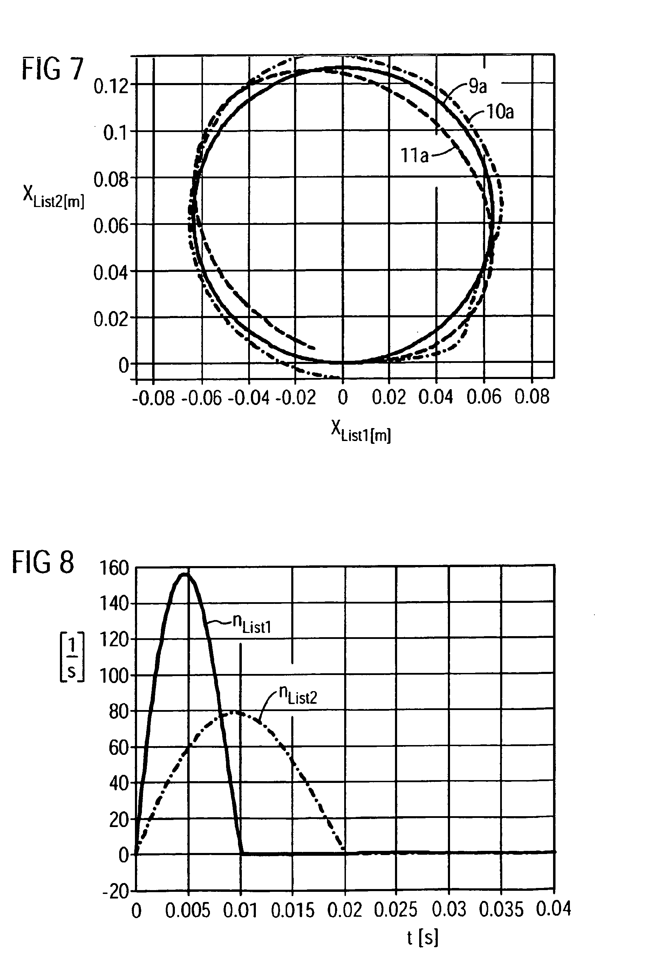

Wendet man nun die beschriebene Methode des bekannten "Input Shaping" bei Werkzeug- oder Produktionsmaschinen an, deren Antriebsachsen im geometrischen Verbund arbeiten und unterschiedliche mechanische Eigenfrequenzen aufweisen, was im Allgemeinen immer gegeben ist, so ergibt sich das in FIG 7 veranschaulichte Problem.

In FIG 7 soll als Bewegungsbahn S ein Kreis abgefahren werden. Die Lageistwertverläufe $X_{List1}$ und $X_{List2}$ der jeweils zugehörigen Antriebsachsen 6a und 6b sind in FIG 7 dargestellt. Die Kurve 9a zeigt den idealen Kreisverlauf. Die Kurve 10a zeigt den Verlauf des Kreises beim Betrieb der Maschine ohne "Input Shaping". Es treten dabei Genauigkeitsprobleme infolge der auftretenden mechanischen Schwingungen der Antriebsachsen 6a und 6b auf. Die Kurve 11a zeigt das Ergebnis beim Betrieb mit "Input Shaping" der beiden Antriebsachsen 6a und 6b. Der Kreis weist ein ellipsenförmiger Verlauf auf. Die mechanischen Schwingungen werden durch das "Input Shaping" zwar nicht mehr angeregt, jedoch ist das Ergebnis gegenüber dem konventionellen Betrieb ohne "Input Shaping" nicht besser.

Der Grund hierfür war bisher unbekannt. Die genannte Problematik führt heutzutage hierzu, dass das Verfahren des "Input Shaping" nur bei Bewegungsvorgängen entlang einer Achse der Maschine durchgeführt wird, d.h. es ist immer nur eine Antriebsachse in Betrieb. Das Abfahren eines Kreises oder einer beliebigen Bewegung auf einer Fläche oder im Raum, bei dem zwangsläufig die einzelnen Antriebsachsen im geometrischen Verbund, d.h. gleichzeitig arbeiten müssen, war bisher nicht möglich.

An dieser Stelle sei angemerkt, dass auch abgewandelte Verfahren des "Input Shaping" bekannt sind (siehe z.B. Tarunraj Singh, William Singhose, 'Tutorial on Input shaping/Time Delay Control of Maneuvering Flexible Structures', http://code.eng.buffalo.edu/tdf/papers/acc_tut.pdf), die allerdings ebenfalls den schon beschrieben Nachteil aufweisen. Unter dem Begriff "Input Shaping" werden im Rahmen der vorliegenden Erfindung auch diese Verfahren verstanden.

Aufgabe der vorliegenden Erfindung ist es daher, ein Verfahren zur Bewegungsführung eines bewegbaren Maschinenelementes einer Werkzeug- oder Produktionsmaschine mit mindestens zwei Antriebsachsen zu schaffen, bei der das Verfahren des "Input Shaping" dermaßen weitergebildet wird, dass die Antriebsachsen der Maschinen auch im geometrischen Verbund arbeiten können.

Diese Aufgabe wird gelöst durch ein Verfahren zur Bewegungsführung eines bewegbaren Maschinenelements einer Werkzeug- oder Produktionsmaschine mit mindestens zwei Antriebsachsen, wobei für jede Antriebsachse der Maschine, jeweilig der Antriebsachse zugeordnete Sollwerte zur Steuerung der Bewegungsführung einer der jeweiligen Antriebsachse zugeordneten Regelung als Regelsollgrößen zugeführt werden, wobei die Sollwerte der Antriebsachsen mit der nicht niedrigsten mechanischen Eigenfrequenz zeitlich verzögert werden.

Weiterhin wird diese Aufgabe gelöst durch eine Einrichtung zur Bewegungsführung eines bewegbaren Maschinenelements einer Werkzeug- oder Produktionsmaschine mit mindestens zwei Antriebsachsen, wobei für jede Antriebsachse der Maschine, jeweilig der Antriebsachse zugeordnete Sollwerte zur Steuerung der Bewegungsführung von einer Steuerung der Maschine erzeugbar und einer der jeweiligen Antriebsachse zugeordneten Regelung als Regelsollgröße zuführbar sind, wobei die Sollwerte der Antriebsachsen mit der nicht niedrigsten mechanischen Eigenfrequenz mittels eines Verzögerers zeitlich verzögerbar sind.

Im Rahmen der vorliegenden Erfindung werden unter dem Begriff Werkzeugmaschinen z.B. ein- oder mehrachsige Dreh-, Fräs-, Bohr- oder Schleifmaschinen verstanden. Zu den Werkzeugmaschinen werden im Rahmen der vorliegenden Erfindung auch noch Bearbeitungszentren, lineare und rotatorische Transfermaschinen, Lasermaschinen oder Wälz- und Verzahnmaschinen gezählt. Allen gemeinsam ist, dass ein Material bearbeitet wird, wobei diese Bearbeitung mehrachsig ausgeführt werden kann. Zu den Produktionsmaschinen werden im Rahmen der vorliegenden Erfindung z.B. Textil-, Kunststoff-, Holz-, Glas-, Keramik- oder Steinbearbeitungsmaschinen gezählt. Maschinen der Umformtechnik, Verpackungstechnik, Drucktechnik, Fördertechnik, Transporttechnik, Hebewerkzeuge, Kräne, Roboter und Fertigungsstraßen gehören ebenfalls im Rahmen der vorliegenden Erfindung zu den Produktionsmaschinen.

Eine erste vorteilhafte Ausbildung der Erfindung ist dadurch gekennzeichnet, dass die Sollwerte der Antriebsachsen mit der nicht niedrigsten mechanischen Eigenfrequenz vorzugsweise jeweilig um die Verzögerungszeit $T_V = abs\left(\dfrac{1}{2 \cdot f_{dv}} - \dfrac{1}{2 \cdot f_d}\right)$ verzögert werden, wobei $f_{dv}$ die mechanische Eigenfrequenz der jeweiligen Antriebsachse v mit der nicht niedrigsten mechanischen Eigenfrequenz ist und $f_d$ die Antriebsachse mit der niedrigsten mechanischen Eigenfrequenz ist. Hierdurch lässt sich eine besonders gute Korrektur der Konturverzerrungen infolge des "Input Shaping" erzielen.

Ferner erweist es sich als vorteilhaft, dass die Sollwerte in Form von Geschwindigkeitssollwerten, Lagesollwerten, Beschleunigungssollwerten oder Rucksollwerten vorliegen. Die von der Steuerung an die Regelung übergebenen Sollwerte liegen in der Regel in Form von Geschwindigkeit, Lage, Beschleunigung oder Ruck vor. Das erfindungsgemäße Verfahren kann für alle Arten von Sollwerten verwendet werden.

Weiterhin erweist es sich als vorteilhaft, dass die Sollwerte der Antriebsachsen mit der nicht niedrigsten mechanischen Eigenfrequenz vorzugsweise jeweilig um die Verzögerungszeit $T_V = abs\left(\dfrac{1}{2 \cdot f_{dv}} - \dfrac{1}{2 \cdot f_d}\right)$ verzögerbar sind, wobei $f_{dv}$ die mechanische Eigenfrequenz der jeweiligen Antriebsachse v mit der nicht niedrigsten mechanischen Eigenfrequenz ist und $f_d$ die Antriebsachse mit der niedrigsten mechanischen Eigenfrequenz ist. Hierdurch lässt sich eine besonders gute Korrektur der Konturverzerrungen infolge des "Input Shaping" erzielen.

Ferner erweist es sich als vorteilhaft, dass die Sollwerte in Form von Geschwindigkeitssollwerten, Lagesollwerten, Beschleunigungssollwerten oder Rucksollwerten vorliegen. Die erfindungsgemäße Einrichtung kann für alle Arten von Sollwerten verwendet werden.

Weiterhin erweist es sich als vorteilhaft, dass der Verzögerer integraler Bestandteil einer um den Verzögerer erweiterten Steuerung ist. Der Verzögerer kann leicht insbesondere bei numerischen Steuerungen in eine bereits vorhandene Steuerung integriert werden ohne dass zusätzlicher Hardwareaufwand zur Realisierung des Verzögerers benötigt wird.

Weiterhin erweist es sich als vorteilhaft, dass der Verzögerer 10 integraler Bestandteil einer um den Verzögerer erweiterten Regelung ist. Der Verzögerer kann leicht insbesondere bei numerischen Regelungen in eine bereits vorhandene Regelung integriert werden ohne dass zusätzlicher Hardwareaufwand zur Realisierung des Verzögerers benötigt wird.

Ein Ausführungsbeispiel der Erfindung ist in der Zeichnung dargestellt und wird im folgenden näher erläutert. Dabei zeigen:

FIG 1     ein Blockschaltbild einer zweiachsigen Werkzeug- oder Produktionsmaschine,

FIG 2     Impulsantwort eines PT2-Gliedes mit Dämpfung kleiner 1,

FIG 3     Impulsantworten eines PT2-Gliedes auf zwei zeitlich versetzte Eingangsimpulse,

FIG 4     Summenimpulsantwort des PT2-Gliedes auf zwei zeitlich versetzte Impulse,

FIG 5     normierter Verlauf der Lage eines Maschinenelements,

FIG 6     zeitdiskrete Impulse des Lagesollwertverlaufs,

FIG 7     Bewegungsbahnen, ideal, bei konventionellem Betrieb und mit "Input Shaping"

FIG 8     Verlauf der Lastdrehzahlistwerte nach Sollwertsprung,

FIG 9     Verlauf der Lageistwerte nach Sollwertsprung,

FIG 10    erfindungsgemäße zeitliche Verzögerung der Lastdrehzahlistwerte,

FIG 11    Verläufe der Lageistwerte beim erfindungsgemäßen Verfahren,

FIG 12    erfindungsgemäße zeitliche Verzögerung eines Sollwertes,

FIG 13    erfindungsgemäße Einrichtung zur Steuerung der Bewegungsführung,

FIG 14    die durch das erfindungsgemäße Verfahren resultierende Bewegungsbahn am Beispiel eines Kreises und

FIG 15    eine Bewegungsbahn eines Maschinenelementes.

Bisher wurden, wie schon gesagt, das Verfahren des "Input Shaping" bei Maschinen deren Antriebsachsen im geometrischen Verbund arbeiten und unterschiedliche Eigenschwingungen aufweisen in der Technik nicht angewendet, da die Ergebnisse - wie FIG 7 veranschaulicht - sehr unbefriedigend sind. Der Erfinder hat im Rahmen von Untersuchungen, die bisher in der Fachwelt nicht bekannte Ursache für diese unbefriedigenden Ergebnisse ermittelt.

Für die folgenden Betrachtungen wird angenommen, dass das bekannte Verfahren des "Input Shaping" bereits innerhalb der Steuerung 1 gemäß FIG 1. realisiert ist, so dass die beiden Lastdrehzahlsollwerte $n_{Lsoll1}$ und $n_{Lsoll2}$ in FIG 1 bereits jeweils einem "Input Shaping" unterworfen wurden.

In FIG 8 ist der Verlauf der beiden Lastistdrehzahlen $n_{List1}$ und $n_{List2}$ für die beiden Antriebsachsen 6a und 6b gemäß FIG 1 dargestellt. Man erkennt, dass die Lastistdrehzahl $n_{Listl1}$ der Antriebsachse 6a und die Lastistdrehzahl $n_{List2}$ der Antriebsachse 6b infolge des, innerhalb der Steuerung 1 durchgeführten "Input Shaping" der ausgegebenen Sollgrößen, schwingungsfrei einschwingen.

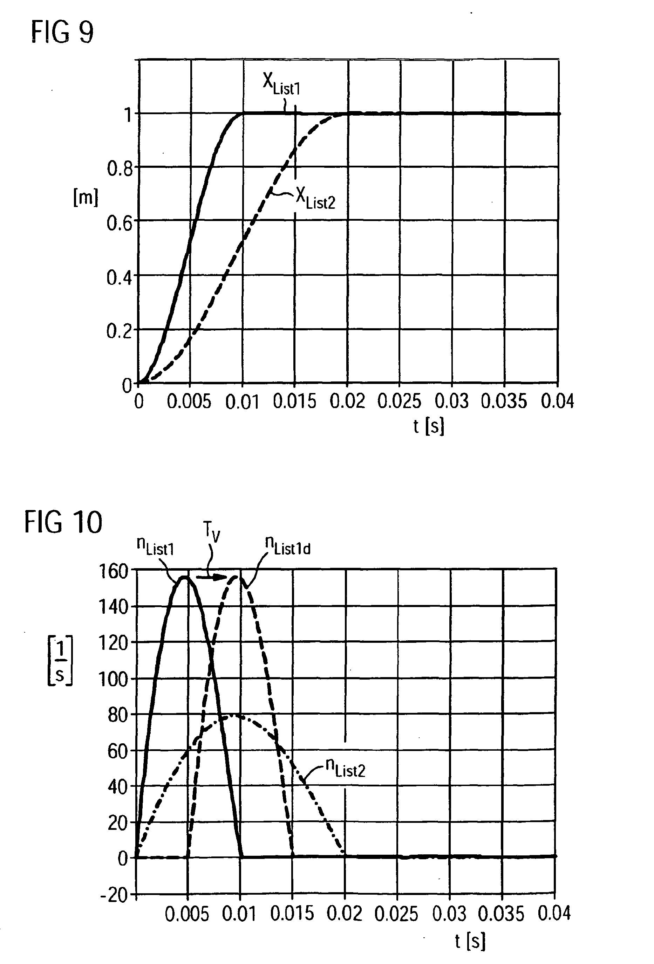

In FIG 9 sind die zu der jeweiligen Lastistdrehzahl $n_{List1}$ und $n_{List2}$ zugehörige Lage $X_{List1}$ und $X_{List2}$ , die durch Integration der jeweilig zugehörigen Lastistdrehzahl $n_{Ligt1}$ und $n_{List2}$ ermittelt wurden, aufgezeichnet. Man erkennt, dass die Lage $X_{List1}$ und $X_{List2}$ gemäß FIG 9 mit unterschiedlichen Verzögerungen aufgebaut werden. An der Kontur, z.B. am Kreis gemäß FIG 7, hat dies entsprechend Konturverzerrungen zur Folge.

Die Grundidee der vorliegenden Erfindung ist es nun, die Drehzahlsollwerte, welche von der Steuerung 1 an die jeweilige Regelung geschickt werden und infolge des von der Steuerung durchgeführten "Input Shaping" für jede Antriebsachse jeweils als zwei versetzte Eingansimpulsfolgen vorliegen (in FIG 6 ist eine solche Eingangsimpulsfolge beispielhaft für die Antriebsachse 6a dargestellt), die Drehzahlsollwerte derart zu symmetrieren, dass die durch das " Input Shaping " bedingten Konturfehler der Bewegungsbahn S minimal werden. Erfindungsgemäß erfolgt dies dadurch, dass die Sollwerte der Antriebsachsen v mit der nicht niedrigsten mechanischen Eigenfrequenz $f_{dv}$ zeitlich verzögert werden. Der Index v läuft dabei von 1 bis n-1, wobei n die Anzahl der Antriebsachsen der Maschine ist.

Die erforderliche Verzögerungszeit $T_v$ lässt sich anschaulich aus FIG 10 ablesen.

In FIG 10 sind noch einmal die beiden Lastistdrehzahlen $n_{istL1}$ und $n_{istL2}$ aus FIG 8 dargestellt. Die Lastistdrehzahl $n_{istL1}$, die in dem Ausführungsbeispiel die Antriebsachse mit der nicht niedrigsten mechanischen Eigenfrequenz ist $f_{d1}$ (Antriebsachse 1 besitzt in dem Ausführungsbeispiel eine Eigenfrequenz von 50 Hz und Antriebsachse 2 eine Eigenfrequenz von 25 Hz) wird nun erfindungsgemäß zeitlich verzögert um eine Anpassung an die Lastistdrehzahl der Antriebsachse mit der niedrigsten mechanischen Eigenfrequenz, die in dem Ausführungsbeispiel die Achse 6b ist, gemäß FIG 1, zu gewährleisten. Die um die Zeit $T_v$ verzögerte Lastistdrehzahl $n_{istL1}$ ist in FIG 10 mit $n_{List1d}$ bezeichnet. Die Amplitude der verzögerten Lastistdrehzahl $n_{List1d}$ und der Lastistdrehzahl $n_{List1}$ der zweiten Antriebsachse (Antriebsachse mit der niedrigsten mechanischen Eigenfrequenz $f_d$) müssen dabei zeitlich übereinstimmen.

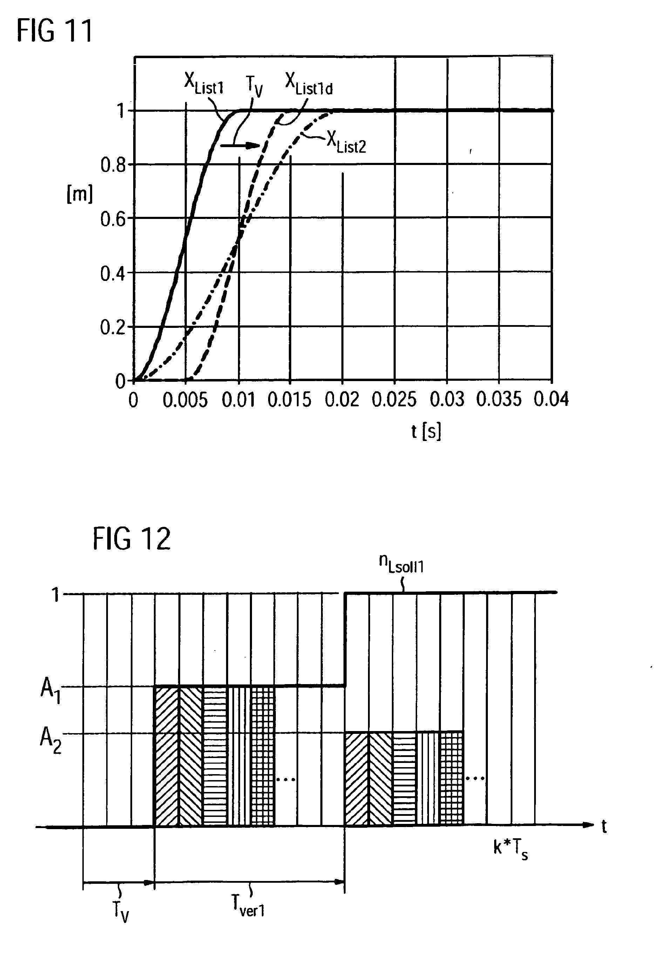

Durch Integration der Lastistdrehzahlen $n_{List1}$, $n_{List2}$ und $n_{List1d}$ gemäß FIG 10 ergeben sich die entsprechend jeweilig zugehörigen Lage $X_{List1}$, $X_{List2}$ und $X_{List1d}$ gemäß FIG 11. Man erkannt, dass nun bedingt durch die erfindungsgemäße Verzögerung das Integral der Lage über der Zeit, bei den beiden Antriebsachsen 6a und 6b gleich ist und somit der Konturfehler minimal wird.

Um eine zeitliche Verzögerung der Lastdrehzahlistwerte der Antriebsachse mit der niedrigsten mechanischen Eigenfrequenz zu gewährleisten, werden erfindungsgemäß die Sollwerte, d.h. im Ausführungsbeispiel werden die Lastsolldrehzahlwerte $n_{Lsoll1}$ der Antriebsachse mit der nicht niedrigen mechanischen Eigenfrequenz zeitlich verzögert, wobei in dem Ausführungsbeispiel die nicht niedrigste mechanische Eigenfrequenz die Antriebsachse 6a aufweist. Besonders gute Ergebnisse werden erzielt, wenn die Sollwerte der Antriebsachsen v mit der nicht niedrigsten mechanischen Eigenfrequenz $f_{dv}$ identisch oder zumindest ähnlich mit der Verzögerungszeit

$$T_v = abs\left(\frac{1}{2 \cdot f_{dv}} - \frac{1}{2 \cdot f_d}\right) \qquad \text{v = 1 bis n-1 \quad (8)}$$

n:         Anzahl der Antriebsachsen

abs(u):      Betrag der Funktion u

verzögert werden, wobei $f_{dv}$ die mechanische Eigenfrequenz der jeweiligen Antriebsachse v mit der nicht niedrigsten mechanischen Eigenfrequenz ist und $f_d$ die Antriebsachse mit der niedrigsten mechanischen Eigenfrequenz ist. In dem Ausführungsbeispiel besitzt die Antriebsachse 6a die nicht niedrigste mechanische Eigenfrequenz $f_{d1}$, so dass die Lastsolldrehzahl $n_{Lsoll1}$ der Antriebsachse 6a zeitlich um die Verzögerungszeit $T_v$ verzögert wird.

In FIG 12 sind die erfindungsgemäß verschobenen Lastdrehzahlsollwerte $n_{Lsoll1}$, die um die Verzögerungszeit $T_v$ verzögert sind, dargestellt. Im Gegensatz zu FIG 6 sind jetzt die Drehzahlsollwerte $n_{Lsoll1}$ der Antriebsachse 6a um die Verzögerungszeit $T_v$ entsprechend der Beziehung 8 verzögert.

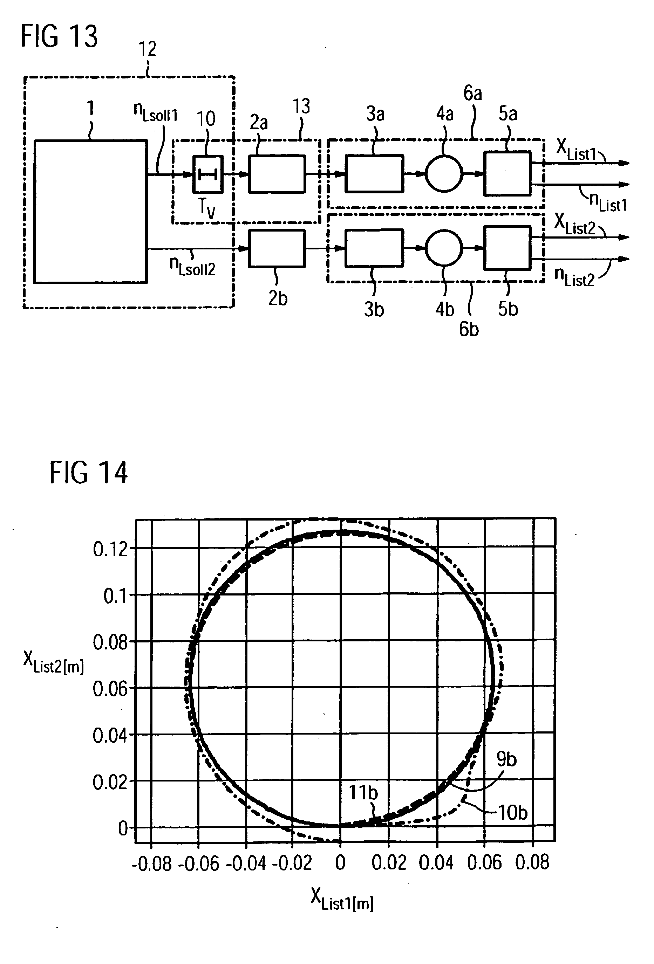

In FIG 13 ist eine erfindungsgemäße Einrichtung zur Bewegungsführung eines bewegbaren Elementes einer Werkzeug- oder Produktionsmaschine dargestellt. Die erfindungsgemäße Einrichtung zur Bewegungsführung gemäß FIG 13 stimmt mit der handelsüblichen Einrichtung zur Bewegungsaufteilung gemäß FIG 1, bis auf das Vorhandensein eines zusätzlichen zeitlichen Verzögerers 10, sowohl funktionell, wie auch in der Bezeichnung der einzelnen Komponenten, überein, so dass bezüglich der allgemeinen Funktionsweise der Einrichtung und Bezeichnung der Komponenten, auf die in der Beschreibung zu FIG 1 gemachten Ausführungen verwiesen wird. Erfindungsgemäß werden die Lastdrehzahlsollwerte $n_{Lsoll1}$ der Antriebsachse 6a mittels eines Verzögerers 10 um die Verzögerungszeit $T_v$ verzögert, bevor sie der Regelung 2a als Regelsollgröße zugeführt werden.

In FIG 14 ist die durch die Erfindung erzielte Verbesserung der Bewegungsbahn anhand der schon in FIG 7 beschriebenen Kreisbewegung dargestellt. Die Kurve 9b stellt die ideale Kreisbahn dar, die Kurve 10b stellt den Verlauf der Kreisbahn bei konventionellen Betrieb ohne "Input Shaping" dar und FIG 11b stellt den Verlauf der Kreisbahn mit "Input Shaping" und Anwendung des erfindungsgemäßen Verfahrens dar. Wie man leicht erkennen kann, ist die Kreisbahn 11b nahezu identisch mit der idealen Kreisbahn 9b. Insbesondere gegenüber der Kreisbahn 11a mit "Input Shaping" aber ohne das erfindungsgemäße Verfahren wurde eine deutliche Verbesserung erzielt.

Die Erfindung wurde im Ausführungsbeispiel anhand einer zweiachsigen Maschine beschrieben. Selbstverständlich ist die Erfindung auch bei einer Maschine mit drei oder noch mehr Antriebsachsen anwendbar. So lassen sich auch räumliche Bewegungen mittels des erfindungsgemäßen Verfahrens und der erfindungsgemäßen Einrichtung in sehr guter Qualität realisieren.

Die mechanische Eigenfrequenz der gedämpften Schwingung der einzelnen Antriebsachsen v kann mittels gängiger Messmethoden (z.B. über eine spektrale Anregung der Antriebsachse und Messung der auftretenden Schwingungen) bestimmt werden, so dass die Lastdrehzahlsollwerte der einzelnen Antriebsachsen v mit der nicht niedrigsten mechanischen Eigenfrequenz $f_{dv}$ mittels eines jeweilig zugeordneten Verzögerers entsprechend zeitlich verzögert werden können.

In den Ausführungsbeispielen wurden Geschwindigkeitssollwerte in Form von Drehzahlsollwerten von der Steuerung 1 an die Regelung 2a und 2b gemäß FIG 1. zur Steuerung der Bewegungsführung des Maschinenelementes weitergegeben. Selbstverständlich können die Sollwerte auch in Form von Lagesollwerten, Beschleunigungssollwerten oder Rucksollwerten vorliegen d.h. zwischen der Steuerung und den einzelnen Regelungen der Antriebsachsen können die Sollwerte auch in Form von Lage, Beschleunigung oder Ruck vorliegen. Auch die Lagesollwerte, Beschleunigungssollwerte oder Rucksollwerte können erfindungsgemäß entsprechend verzögert werden. So dass die Erfindung auch bei diesen Arten von Sollwerten anwendbar ist.

Weiterhin sei an dieser Stelle angemerkt, dass der Verzögerer 10 integraler Bestandteil einer um den Verzögerer 10 erweiterten Steuerung 12 sein kann. Der Verzögerer 10 kann leicht insbesondere bei numerischen Steuerungen in eine bereits vorhandene Steuerung integriert werden ohne dass zusätzlicher Hardwareaufwand zur Realisierung des Verzögerers benötigt wird.

Alternativ kann der Verzögerer 10 aber auch integraler Bestandteil einer um den Verzögerer 10 erweiterten Regelung 13 sein kann. Der Verzögerer 10 kann leicht insbesondere bei numerischen Regelungen in eine bereits vorhandene Regelung integriert werden ohne dass zusätzlicher Hardwareaufwand zur Realisierung des Verzögerers benötigt wird.

Im Rahmen der Erfindung sei an dieser Stelle angemerkt, dass die Antriebsachsen mehrere Eigenfrequenzen aufweisen können. Das erfindungsgemäße Verfahren lässt sich selbstverständlich auf jede dieser Eigenfrequenzen unabhängig durch z.B. Anwendung des Überlagerungsprinzips anwenden.

**Patentansprüche**

1. Verfahren zur Bewegungsführung eines bewegbaren Maschinenelements (8) einer Werkzeug- oder Produktionsmaschine mit mindestens zwei Antriebsachsen (6a,6b), wobei für jede Antriebsachse (6a,6b) der Maschine, jeweilig der Antriebsachse (6a,6b) zugeordnete Sollwerte ($n_{Lsoll1}$, $n_{Lsoll2}$) zur Steuerung der Bewegungsführung einer der jeweiligen Antriebsachse (6a,6b) zugeordneten Regelung (2a,2b) als Regelsollgröße zugeführt werden, wobei die Sollwerte ($n_{Lsoll1}$, $n_{Lsoll2}$) der Antriebsachsen (2a, 2b) mit der nicht niedrigsten mechanischen Eigenfrequenz ($fd_v$) zeitlich verzögert werden.

2. Verfahren nach Anspruch 1, **dadurch gekennzeichnet , dass** die Sollwerte ($n_{Lsoll1}$, $n_{Lsoll2}$) der Antriebsachsen (6a,6b) mit der nicht niedrigsten mechanischen Eigenfrequenz $fd_v$ vorzugsweise jeweilig um die Verzögerungszeit

$$T_V = abs\left(\frac{1}{2 \cdot f_{dv}} - \frac{1}{2 \cdot f_d}\right)$$ verzögert werden, wobei $f_{dv}$ die mechanische Eigenfrequenz der jeweiligen Antriebsachse ν mit der nicht niedrigsten mechanischen Eigenfrequenz ist und $f_d$ die Antriebsachse mit der niedrigsten mechanischen Eigenfrequenz ist.

3. Verfahren nach einem der vorhergehenden Ansprüche, **dadurch gekennzeichnet, dass** die Sollwerte ($n_{Lsoll1}$, $n_{Lsoll2}$) in Form von Geschwindigkeitssollwerten, Lagesollwerten, Beschleunigungssollwerten oder Rucksollwerten vorliegen.

4. Einrichtung zur Bewegungsführung eines bewegbaren Maschinenelements (8) einer Werkzeug- oder Produktionsmaschine mit mindestens zwei Antriebsachsen (6a,6b), wobei für jede Antriebsachse (6a,6b) der Maschine, jeweilig der Antriebsachse zugeordnete Sollwerte ($n_{Lsoll1}$, $n_{Lsoll2}$) zur Steuerung der Bewegungsführung von einer Steuerung (1) der Maschine erzeugbar und einer der jeweiligen Antriebsachse (6a,6b) zugeordneten Regelung (2a,2b) als Regelsollgröße zuführbar sind, wobei die Sollwerte ($n_{Lsoll1}$, $n_{Lsoll2}$) der Antriebsachsen (2a,2b) mit der nicht niedrigsten mechanischen Eigenfrequenz ($fd_v$) mittels eines Verzögerers (10) zeitlich verzögerbar sind.

5. Einrichtung nach Anspruch 4, **dadurch gekennzeichnet , dass** die Sollwerte ($n_{Lsoll1}$, $n_{Lsoll2}$) der Antriebsachsen (6a,6b) mit der nicht niedrigsten mechanischen Eigenfrequenz $fd_v$ vorzugsweise jeweilig um die Verzögerungszeit

$$T_V = abs\left(\frac{1}{2 \cdot f_{dv}} - \frac{1}{2 \cdot f_d}\right)$$ verzögerbar sind, wobei $f_{d1}$ die mechanische Eigenfrequenz der jeweiligen Antriebsachse ν mit der nicht niedrigsten mechanischen Eigenfrequenz ist und $f_d$ die Antriebsachse mit der niedrigsten mechanischen Eigenfrequenz ist.

6. Einrichtung nach Anspruch 4 oder 5, **dadurch gekennzeichnet , dass** die Sollwerte ($n_{Lsoll1}$, $n_{Lso112}$) in Form von Geschwindigkeitssollwerten, Lagesollwerten, Beschleunigungssollwerten oder Rucksollwerten vorliegen.

7. Einrichtung nach Anspruch 4, 5 oder 6, **dadurch gekennzeichnet , dass** der Verzögerer 10 integraler Bestandteil einer um den Verzögerer 10 erweiterten Steuerung 12 ist.

8. Einrichtung nach Anspruch 4, 5 oder 6, **dadurch gekennzeichnet , dass** der Verzögerer 10 integraler Bestandteil einer um den Verzögerer 10 erweiterten Regelung 13 ist.

**Claims**

1. Method for controlling a movement of a movable machine element (8) of a machine tool or production machine with at least two drive axles (6a, 6b), with desired values ($n_{Lsoll1}$, $n_{Lsoll2}$) assigned in each instance to the drive axles (6a, 6b) for controlling the movement of a control unit (2a, 2b) assigned to each respective drive axle (6a, 6b) being supplied as desired control variables for each drive axle (6a, 6b), with the desired values ($n_{Lsoll1}$, $n_{Lsoll2}$) of the drive axles (2a, 2b) being delayed with the mechanical characteristic frequency ($fd_v$) which is not the lowest.

2. Method according to claim 1, **characterized in that** the desired values ($n_{Lsoll1}$, $n_{Lsoll2}$) of the drive axles (6a, 6b) which do not have the lowest characteristic frequency $f_{dv}$ are preferably delayed in each instance with the delay time $T_v = abs\left(\dfrac{1}{2 \cdot f_{dv}} - \dfrac{1}{2 \cdot f_d}\right)$, with $f_{dv}$ being the mechanical characteristic frequency of the respective drive axle v with a mechanical characteristic frequency which is not the lowest and $f_d$ being the drive axle with the lowest mechanical characteristic frequency.

3. Method according to one of the preceding claims, **characterized in that** the desired values $(n_{Lsoll1}, n_{Lsoll2})$ are provided in the form of desired velocity values, desired position values, desired acceleration values or desired jerk values.

4. Device for controlling a movement of a movable machine element (8) of a machine tool or production machine with at least two drive axles (6a, 6b), with the desired values $(n_{Lsoll1}, n_{Lsoll2})$ assigned in each instance to the drive axle being able to be generated for each drive axle (6a, 6b) by a controller (1) of the machine to control the movement and one of the control units (2a, 2b) assigned to the respective drive axle (6a,6b) being able to be supplied as a desired control variable, with the desired values $(n_{Lsoll1}, n_{Lsoll2})$ of the drive axles (2a, 2b) with the mechanical characteristic frequency $f_{dv}$ which is not the lowest being able to be time-delayed by means of a delay unit (10).

5. Device according to claim 4, **characterised in that** the desired values $(n_{Lsoll1}, n_{Lsoll2})$ of the drive axles (6a,6b) with the mechanical characteristic frequency $f_{dv}$ which is not the lowest can preferably be delayed in each instance with the delay time $T_v = abs\left(\dfrac{1}{2 \cdot f_{dv}} - \dfrac{1}{2 \cdot f_d}\right)$, with $f_{d1}$ being the mechanical characteristic frequency of the respective drive axle v which does not have the lowest mechanical frequency and $f_d$ being the drive axle with the lowest mechanic characteristic frequency.

6. Device according to claim 4 or 5, **characterized in that** the desired values $(n_{Lsoll1}, n_{Lsoll2})$ are provided in the form of desired velocity values, desired position values, desired acceleration values or desired jerk values.

7. Device according to claim 4, 5 or 6, **characterized in that** the delay unit 10 is an integral part of a controller 12 which is extended by the delay unit 10.

8. Device according to claim 4, 5 or 6, **characterized in that** the delay unit 10 is an integral part of a control unit 13 which is extended by the delay unit 10.

**Revendications**

1. Procédé de guidage du déplacement d'un élément de machine (8) mobile d'une machine-outil ou d'une machine de production, ayant au moins deux axes d'entraînement (6a, 6b), des valeurs de consigne $(n_{Lsoll1}, n_{Lsoll2})$ affectées respectivement à l'axe d'entraînement (6a, 6b) étant, pour chaque axe d'entraînement (6a, 6b) de la machine, envoyées en tant que grandeur de consigne de régulation de la commande de guidage de déplacement à une régulation (2a, 2b) affectée à l'axe d'entraînement respectif (6a, 6b), les valeurs de consigne $(n_{Lsoll1}, n_{Lsoll2})$ des axes d'entraînement (2a, 2b) ayant la fréquence propre $(fd_v)$ mécanique qui n'est pas la plus basse étant temporisées.

2. Procédé selon la revendication 1, **caractérisé en ce que** les valeurs de consigne $(n_{Lsoll1}, n_{Lsoll2})$ des axes d'entraînement (6a, 6b) ayant la fréquence propre $(fd_v)$ mécanique qui n'est pas la plus basse sont temporisées, de préférence respectivement du temps de temporisation $T_V = abs\left(\dfrac{1}{2.f_{dv}} - \dfrac{1}{2.f_d}\right)$, $fd_v$ étant la fréquence propre mécanique de l'axe d'entraînement v respectif ayant la fréquence propre mécanique qui n'est pas la plus basse, et $f_d$ étant l'axe d'entraînement ayant la fréquence propre mécanique la plus basse.

3. Procédé selon l'une des revendications précédentes, **caractérisé en ce que** les valeurs de consigne $(n_{Lsoll1}, n_{Lsoll2})$

se présentent sous forme de valeurs de consigne de vitesse, de valeurs de consigne de position, de valeurs de consigne d'accélération ou de valeurs de consigne de secousse.

4. Equipement pour le guidage du déplacement d'un élément de machine (8) mobile d'une machine-outil ou d'une machine de production, ayant au moins deux axes d'entraînement (6a, 6b), des valeurs de consigne ($n_{Lso111}$, $n_{Lso112}$) affectées respectivement à l'axe d'entraînement (6a, 6b), pouvant, pour chaque axe d'entraînement (6a, 6b) de la machine, être produites, pour la commande du guidage de déplacement, par une commande (1) de la machine, et pouvant être envoyées, en tant que grandeur de consigne de régulation, à une régulation (2a, 2b) affectée à l'axe d'entraînement (6a, 6b) respectif, les valeurs de consigne ($n_{Lso111}$, $n_{Lso112}$) des axes d'entraînement (2a, 2b) ayant la fréquence propre ($fd_v$) mécanique qui n'est pas la plus basse pouvant être temporisées au moyen d'un temporisateur (10).

5. Equipement selon la revendication 4, **caractérisé en ce que** les valeurs de consigne ($n_{Lso111}$, $n_{Lso112}$) des axes d'entraînement (6a, 6b) ayant la fréquence propre mécanique $fd_v$ qui n'est pas la plus basse peuvent être temporisées, de préférence respectivement du temps de temporisation $\mathrm{T}_V = \mathrm{abs} \left( \dfrac{1}{2.f_{dv}} - \dfrac{1}{2.f_d} \right)$ , $fd_1$ étant

la fréquence propre mécanique de l'axe d'entraînement $v$ respectif avec la fréquence propre mécanique qui n'est pas la plus basse et $f_d$ étant l'axe d'entraînement avec la fréquence propre mécanique la plus basse.

6. Equipement selon la revendication 4 ou 5, **caractérisé en ce que** les valeurs de consigne ($n_{Lso111}$, $n_{Lso112}$) se présentent sous forme de valeurs de consigne de vitesse, de valeurs de consigne de position, de valeurs de consigne d'accélération ou de valeurs de consigne de secousse.

7. Equipement selon la revendication 4 ou 5 ou 6, **caractérisé en ce que** le temporisateur 10 fait partie intégrante d'une commande 12 agrandie du temporisateur 10.

8. Equipement selon la revendication 4 ou 5 ou 6, **caractérisé en ce que** le temporisateur 10 fait partie intégrante d'une régulation 13 agrandie du temporisateur 10.

## FIG 1

## FIG 2

## FIG 3

## FIG 4

## FIG 5

## FIG 6

FIG 7

FIG 8

FIG 9

FIG 10

## FIG 11

## FIG 12

## FIG 13

## FIG 14

# FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5465035 A